# EUROPÄISCHE PATENTSCHRIFT

(11) **EP 3 132 484 B1**
(45) Veröffentlichungstag und Bekanntmachung des Hinweises auf die Patenterteilung: **07.11.2018**
(21) Anmeldenummer: 15718352.6
(22) Anmeldetag: 13.04.2015
(51) Int. Cl.: H01M 8/0612, F28D 9/04, H01M 8/04014, H01M 8/04007, F28D 21/00, H01M 8/124

(54) **BRENNSTOFFZELLENVORRICHTUNG**
FUEL CELL DEVICE
DISPOSITIF DE PILE À COMBUSTIBLE

(30) Priorität: 14.04.2014 DE 102014207143
(43) Veröffentlichungstag der Anmeldung: 22.02.2017
(73) Patentinhaber: Robert Bosch GmbH, 70442 Stuttgart (DE)
(72) Erfinder: WU, Datong, 75181 Pforzheim (DE); BECKERT, Markus, 75417 Muehlacker (DE); CARRE, Maxime, 70469 Stuttgart (DE)
(86) Internationale Anmeldenummer: PCT/EP2015/057990
(87) Internationale Veröffentlichungsnummer: WO 2015/158669

(56) Entgegenhaltungen:
- JP-A- 2004 335 164
- US-A1- 2003 134 174
- US-B2- 7 247 402

## Beschreibung

### Stand der Technik

Die Erfindung betrifft eine Brennstoffzellenvorrichtung nach dem Oberbegriff des Patentanspruchs 1.

Aus der US 2003/134174 A1 ist bereits eine Brennstoffzellenvorrichtung mit einem Brennstoffzellenstack mit einem ersten Wärmeübertrager und einem zweiten Wärmeübertrager bekannt, welche spiralförmig um den Brennstoffzellenstack herumgeführt sind. Der erste Wärmeübertrager ist dazu vorgesehen, ein Brenngas, welches dem Brennstoffzellenstack anodenseitig zugeführt wird, zu erwärmen. Der zweite Wärmeübertrager ist dazu vorgesehen, eine Umgebungsluft, welche dem Brennstoffzellenstack kathodenseitig zugeführt wird, zu erwärmen. Dabei ist der erste Wärmeübetrager fluidtechnisch nicht von dem zweiten Wärmeübertrager getrennt.

Aus der US 7,892,684 ist bereits eine Brennstoffzellenvorrichtung mit einem tubularen Brennstoffzellenstack und einem Wärmeübertrager bekannt, bei welcher der Wärmeübertrager spiralförmig um den Brennstoffzellenstack herumgeführt ist. Der Wärmeübertrager ist dazu vorgesehen, ein Brenngas, welches dem Brennstoffzellenstack anodenseitig zugeführt wird, oder eine Umgebungsluft, welche dem Brennstoffzellenstack kathodenseitig zugeführt wird, zu erwärmen. Ein gleichzeitiges Erwärmen beider Fluidströme mittels des Wärmeübertragers ist unmöglich.

Aus der US 7,247,402 B2 ist eine Brennstoffzellenvorrichtung mit einem Brennstoffzellenstack und mit einem Wärmetauscher, welcher bekannt spiralförmig um den Brennstoffzellenstack herumgeführt und dazu vorgesehen ist, ein dem Brennstoffzellenstack zugeführtes Brenngas mittels einem dem Brennstoffzellenstack abgeführten Abgas zu erwärmen.

### Offenbarung der Erfindung

Die Erfindung geht aus von einer Brennstoffzellenvorrichtung, welche insbesondere dazu vorgesehen ist, mit einem Erdgas betrieben zu werden, mit einer Brennstoffzelleneinheit, welche zumindest eine Anode und zumindest eine Kathode aufweist, mit zumindest einem Anodengasprozessor, welcher zumindest einen ersten Wärmeübertrager aufweist, und mit zumindest einem Kathodengasprozessor, welcher zumindest einen zweiten Wärmeübertrager aufweist, wobei der zumindest eine erste Wärmeübertrager und der zumindest eine zweite Wärmeübertrager jeweils spiralförmig ausgebildet sind, wobei der zumindest eine erste Wärmeübertrager und der zumindest eine zweite Wärmeübertrager zumindest einen Teil einer baulichen Einheit bilden.

Erfindungsgemäss ist vorgesehen, dass die Brennstoffzellenvorrichtung zumindest ein Trennelement aufweist, welches dazu vorgesehen ist, den zumindest einen ersten Wärmeübertrager fluidtechnisch von dem zumindest einen zweiten Wärmeübertrager zu trennen.

Unter einer "Brennstoffzellenvorrichtung" soll in diesem Zusammenhang insbesondere eine Vorrichtung zu einer stationären und/oder mobilen Gewinnung insbesondere elektrischer und/oder thermischer Energie unter Verwendung zumindest einer Brennstoffzelleneinheit verstanden werden. Unter einer "Brennstoffzelleneinheit" soll in diesem Zusammenhang insbesondere eine Einheit mit zumindest einer Brennstoffzelle verstanden werden, welche dazu vorgesehen ist, zumindest eine chemische Reaktionsenergie zumindest eines, insbesondere kontinuierlich zugeführten, Brenngases, insbesondere Wasserstoff und/oder Kohlenstoffmonoxid, und zumindest eines Oxidationsmittels, insbesondere Sauerstoff, insbesondere in elektrische Energie umzuwandeln. Die zumindest eine Brennstoffzelle kann insbesondere als Festoxid-Brennstoffzelle (SOFC) ausgebildet sein. Vorzugsweise umfasst die zumindest eine Brennstoffzelleneinheit eine Vielzahl von Brennstoffzellen, welche insbesondere in einem, insbesondere tubularen und/oder planaren, Brennstoffzellenstack angeordnet sind. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Unter einem "Erdgas" soll in diesem Zusammenhang insbesondere ein Gas und/oder ein Gasgemisch, insbesondere ein Naturgasgemisch, verstanden werden, welches zumindest ein Alkan, insbesondere Methan, Ethan, Propan und/oder Butan umfasst. Ferner kann das Erdgas weitere Bestandteile aufweisen, wie insbesondere Kohlenstoffdioxid und/oder Stickstoff und/oder Sauerstoff und/oder Schwefelverbindungen.

Unter einem "Gasprozessor" soll in diesem Zusammenhang insbesondere eine Einheit verstanden werden, welche dazu vorgesehen ist, ein insbesondere gasförmiges Fluid vor einer Zuleitung zu einer Anode und/oder zu einer Kathode der Brennstoffzelleneinheit für eine Verwendung innerhalb einer in der Brennstoffzelleneinheit ablaufenden Reaktion aufzubereiten. Insbesondere ist der zumindest eine Anodengasprozessor dazu vorgesehen, insbesondere das Erdgas und/oder ein Brenngas und/oder ein brenngashaltiges Gasgemisch auf eine Reaktionstemperatur zu erwärmen und/oder das Erdgas in ein Brenngas und/oder ein Brenngasgemisch zu überführen. Der zumindest eine Kathodengasprozessor ist insbesondere dazu vorgesehen, insbesondere eine Umgebungsluft auf eine Reaktionstemperatur zu erwärmen. Unter einem "Wärmeübertrager" soll in diesem Zusammenhang insbesondere eine Einheit verstanden werden, welche dazu vorgesehen ist, Wärme in Richtung eines Temperaturgefälles zwischen zumindest zwei insbesondere fluiden Stoffströmen zu übertragen, insbesondere in einem Gegenstrombetrieb. Der zumindest eine erste Wärmeübertrager ist insbesondere dazu vorgesehen, Wärme von zumindest einem fluiden Stoffstrom, insbesondere einem Abgas und vorzugsweise einem Anodenabgas der Brennstoffzelleneinheit, insbesondere auf das Erdgas und/oder ein Brenngas und/oder ein brenngashaltiges Gasgemisch, welches in zumindest einem Betriebszustand einer Anode der Brennstoffzelleneinheit zugeführt ist, zu übertragen. Der zumindest eine zweite Wärmeübertrager ist insbesondere dazu vorgesehen, Wärme von zumindest einem fluiden Stoffstrom, insbesondere einem Abgas und/oder einem Abgasgemisch der Brennstoffzelleneinheit, auf eine Umgebungsluft, welche einer in zumindest einem Betriebszustand einer Kathode der Brennstoffzelleneinheit zugeführt ist, zu übertragen.

Darunter, dass der zumindest eine erste Wärmeübertrager und der zumindest eine zweite Wärmeübertrager jeweils "spiralförmig" ausgebildet sind, soll insbesondere verstanden werden, dass der zumindest eine erste Wärmeübertrager und der zumindest eine zweite Wärmeübertrager jeweils zumindest einen um jeweils eine Spiralachse verlaufenden Fluidkanal aufweisen, wobei ein Radius eines Verlaufs des zumindest einen Fluidkanals ausgehend von der Spiralachse kontinuierlich, insbesondere proportional zu einem Drehwinkel des Verlaufs des zumindest einen Fluidkanals um die Spiralachse, insbesondere bei einer Betrachtung entlang der Spiralachse, zunimmt. Vorzugsweise verlaufen der zumindest eine Fluidkanal des zumindest einen ersten Wärmeübertragers und der zumindest eine Fluidkanal des zumindest eine zweiten Wärmeübertragers um eine gemeinsame Spiralachse. Vorzugsweise weist der zumindest eine Fluidkanal zumindest einen ersten Abschnitt auf, welcher zumindest im Wesentlichen senkrecht zu der Spiralachse verläuft. Ferner kann der zumindest eine Fluidkanal insbesondere zumindest einen zweiten Abschnitt aufweisen, welcher zumindest im Wesentlichen senkrecht zur Spiralachse verläuft. Unter einem "Fluidkanal" soll in diesem Zusammenhang insbesondere ein zumindest von zwei, insbesondere gegenüberliegenden, Seiten, insbesondere zumindest im Wesentlichen gasdicht, geschlossener Kanal verstanden werden, welcher dazu vorgesehen ist, in zumindest einem Betriebszustand zumindest einen Fluidstrom durch den zumindest einen ersten Wärmeübertrager oder den zumindest einen zweiten Wärmeübertrager zu leiten.

Durch die erfindungsgemäße Ausgestaltung kann eine gattungsgemäße Brennstoffzellenvorrichtung mit vorteilhaften Betriebseigenschaften bereitgestellt werden. Insbesondere können sowohl ein Brenngas, welches der Brennstoffzelleneinheit in zumindest einem Betriebszustand anodenseitig zugeführt wird, als auch eine Umgebungsluft, welche der Brennstoffzelleneinheit in zumindest einem Betriebszustand kathodenseitig zugeführt wird, vorteilhaft auf eine Reaktionstemperatur erwärmt werden, wodurch eine Effizienz der Brennstoffzelleneinheit vorteilhaft gesteigert werden kann. Ferner ermöglicht die spiralförmige Ausgestaltung des zumindest einen ersten Wärmeübertragers und des zumindest einen zweiten Wärmeübertragers eine vorteilhafte Reduktion eines Bauraumbedarfs.

Des Weiteren wird vorgeschlagen, dass der zumindest eine erste Wärmeübertrager und/oder der zumindest eine zweite Wärmeübertrager als eine Doppelspirale ausgebildet ist. Darunter, dass der zumindest eine erste Wärmeübertrager und/oder der zumindest eine zweite Wärmeübertrager als eine "Doppelspirale ausgebildet ist", soll insbesondere verstanden werden, dass der zumindest eine erste Wärmeübertrager und/oder der zumindest eine zweite Wärmeübertrager jeweils zumindest zwei Fluidkanäle aufweist. Die zumindest zwei Fluidkanäle des zumindest einen ersten Wärmeübertragers und/oder des zumindest einen zweiten Wärmeübertragers weisen jeweils zumindest einen ersten Abschnitt auf, welcher zumindest im Wesentlichen senkrecht zu eine Spiralachse und, insbesondere konzentrisch, um die Spiralachse des zumindest einen ersten Wärmeübertragers und/oder des zumindest einen zweiten Wärmeübertragers verläuft. Ferner können die zumindest zwei Fluidkanäle jeweils insbesondere zumindest einen zweiten Abschnitt aufweisen, welcher zumindest im Wesentlichen senkrecht zur Spiralachse des zumindest einen ersten Wärmeübertragers und/oder des zumindest einen zweiten Wärmeübertragers verläuft. Vorzugsweise sind die zumindest zwei Fluidkanäle thermisch miteinander gekoppelt, vorzugsweise unmittelbar benachbart und weisen besonders vorteilhaft zumindest eine gemeinsame Wandung auf. Die zumindest zwei Fluidkanäle sind dabei insbesondere zumindest weitgehend fluidtechnisch voneinander getrennt. Hierdurch kann ein vorteilhaft effektiver Betrieb des zumindest einen ersten Wärmeübertragers und/oder des zumindest einen zweiten Wärmeübertragers, insbesondere nach einem Gegenstromprinzip, erreicht werden.

Ferner wird vorgeschlagen, dass der zumindest eine Anodengasprozessor eine Reformereinheit aufweist, welche innerhalb des zumindest einen ersten Wärmeübertragers angeordnet ist. Unter einer "Reformereinheit" soll in diesem Zusammenhang insbesondere eine chemisch-technische Einheit zu zumindest einer Aufbereitung des Erdgases, insbesondere durch eine Dampfreformierung und/oder durch eine partielle Oxidation und/oder durch eine autotherme Reformierung, insbesondere zur Gewinnung zumindest eines Brenngases und/oder eines brenngashaltigen Gasgemischs, verstanden werden. Die Reformereinheit ist insbesondere teilweise und vorzugsweise vollständig innerhalb zumindest eines Fluidkanals des zumindest einen ersten Wärmeübertragers angeordnet. Hierdurch kann ein der Brennstoffzelleneinheit zugeführtes Erdgas vorteilhaft einfach in ein Brenngas und/oder in ein brenngashaltiges Gasgemisch überführt werden. Insbesondere kann durch die Anordnung einer Reformereinheit innerhalb des zumindest einen Wärmeübertragers auf eine zusätzliche externe Reformereinheit verzichtet werden, wodurch ein Bauraumbedarf vorteilhaft weiter reduziert werden kann.

In einer bevorzugten Ausgestaltung der Erfindung wird vorgeschlagen, dass der zumindest eine erste Wärmeübertrager um einen ersten Aufnahmeraum herumgeführt ist, innerhalb dessen die Brennstoffzelleneinheit angeordnet ist. Darunter, dass ein Wärmeübertrager um einen Aufnahmeraum "herumgeführt" ist, soll insbesondere verstanden werden, dass zumindest ein Fluidkanal und vorzugsweise alle Fluidkanäle des Wärmeübertragers zumindest einmal und vorzugsweise mehrmals, insbesondere zumindest teilweise spiralförmig, um den Aufnahmeraum herum verlaufen. Unter einem "Aufnahmeraum" soll insbesondere ein räumlicher Bereich verstanden werden, der von einer sichtbaren Außenfläche gegenüberliegenden, insbesondere zumindest teilweise von außen nicht sichtbaren, Innenfläche eines Wärmeübertragers begrenzt ist, und zwar insbesondere von zumindest zwei und vorzugsweise von zumindest drei Seiten. Der erste Aufnahmeraum ist insbesondere in Umfangsrichtung zumindest im Wesentlichen von einer Innenfläche des zumindest einen ersten Wärmeübertragers umschlossen. Unter einer "Umfangsrichtung" eines Objekts soll insbesondere eine azimutale, senkrecht zu einer Längserstreckungsrichtung des Objekts angeordnete Richtung verstanden werden. Unter einer "Längserstreckungsrichtung" eines Objekts soll insbesondere eine Richtung verstanden werden, welche parallel ist zu einer längsten Kante eines kleinsten geometrischen Quaders, welcher das Objekt gerade noch umgibt. Darunter, dass der erste Aufnahmeraum von einer Innenfläche eines Wärmeübertragers "zumindest im Wesentlichen umschlossen" ist, soll insbesondere verstanden werden, dass die Innenfläche des Wärmeübertragers in einem montierten Zustand den Aufnahmeraum umschließt und ein Gesamtflächeninhalt aller Ausnehmungen in der Innenfläche des Wärmeübertragers insbesondere maximal 40 %, insbesondere höchstens 30 %, vorzugsweise maximal 20 % und besonders vorteilhaft höchstens 10 % eines Gesamtflächeninhalts der Innenfläche des Wärmeübertragers beträgt. Der erste Aufnahmeraum weist vorzugsweise eine zumindest im Wesentlichen kreisförmige Grundfläche auf, wobei eine Spiralachse des zumindest einen ersten Wärmeübertragers vorzugsweise einen Mittelpunkt der Grundfläche zumindest im Wesentlichen senkrecht schneidet. Hierdurch kann insbesondere in einem Zentrum einer von dem zumindest einen ersten Wärmeübertrager gebildeten Spirale ein Aufnahmeraum insbesondere für die Brennstoffzelleneinheit geschaffen werden. Ferner kann der Brennstoffzelleneinheit vorteilhaft einfach ein Fluid über den zumindest einen ersten Wärmeübertrager zugeführt und/oder zumindest ein Fluid über den zumindest einen ersten Wärmeübertrager von der Brennstoffzelleneinheit abgeführt werden. Des Weiteren kann vorteilhaft eine Abwärme der Brennstoffzelleneinheit genutzt werden.

Ferner wird vorgeschlagen, dass der Kathodengasprozessor eine Nachbrenneinheit aufweist, welche dazu vorgesehen ist, zumindest einen brennbaren Bestandteil eines Abgases zumindest weitgehend nachzuverbrennen. Vorzugsweise ist die Nachbrenneinheit dazu vorgesehen, insbesondere innerhalb eines Anodenabgases enthaltenes Brenngas zumindest weitgehend zu oxidieren. Ein für eine Oxidation des Brenngases benötigter Sauerstoff ist der Nachbrenneinheit insbesondere in Form eines Kathodenabgases zuführbar. Insbesondere während eines Anlaufbetriebszustands der Brennstoffzellenvorrichtung ist die Nachbrenneinheit vorzugsweise mit Erdgas betreibbar. Insbesondere kann die Nachbrenneinheit einen katalytischen Nachbrenner und/oder einen Diffusionsbrenner und/oder einen Rekuperatorbrenner und/oder einen teil- und/oder vollvormischenden Brenner und/oder einen Porenbrenner umfassen. Hierdurch kann ein Ausstoß von Brenngas, insbesondere von Wasserstoff, vorteilhaft reduziert und somit eine Anlagensicherheit vorteilhaft gesteigert werden. Ferner kann eine chemische Energie des Anodenabgases vorteilhaft in Wärme umgewandelt werden.

Des Weiteren wird vorgeschlagen, dass der zumindest eine zweite Wärmeübertrager um einen zweiten Aufnahmeraum herumgeführt ist, innerhalb dessen die Des Weiteren wird vorgeschlagen, dass der zumindest eine zweite Wärmeübertrager um einen zweiten Aufnahmeraum herumgeführt ist, innerhalb dessen die Nachbrenneinheit angeordnet ist. Der zweite Aufnahmeraum ist insbesondere in Umfangsrichtung zumindest im Wesentlichen von einer Innenfläche des zumindest einen zweiten Wärmeübertragers umschlossen. Der zweite Aufnahmeraum weist vorzugsweise eine zumindest im Wesentlichen kreisförmige Grundfläche auf, wobei eine Spiralachse des zumindest einen zweiten Wärmeübertragers vorzugsweise einen Mittelpunkt der Grundfläche zumindest im Wesentlichen senkrecht schneidet. Hierdurch kann insbesondere in einem Zentrum einer von dem zumindest einen zweiten Wärmeübertrager gebildeten Spirale ein Aufnahmeraum für die Nachbrenneinheit geschaffen werden. Ferner kann der Nachbrenneinheit vorteilhaft einfach ein Fluid über den zumindest einen zweiten Wärmeübertrager zugeführt und/oder zumindest ein Fluid über den zumindest einen zweiten Wärmeübertrager von der Nachbrenneinheit abgeführt werden. Des Weiteren kann vorteilhaft eine Abwärme der Nachbrenneinheit genutzt werden.

Ferner wird vorgeschlagen, dass der zumindest eine erste Wärmeübertrager und/oder der zumindest eine zweite Wärmeübertrager eine Fluidleiteinheit aufweist, welche dazu vorgesehen ist, zumindest ein Fluid zumindest im Wesentlichen parallel zu einer Spiralachse mäanderförmig zu leiten. Hierzu weist die Fluidleiteinheit vorzugsweise eine Vielzahl von Fluidleitelementen auf, welche insbesondere entlang einer Fluidfließrichtung innerhalb zumindest eines Fluidkanals des zumindest einen ersten Wärmeübertragers und/oder des zumindest einen zweiten Wärmeübertragers angeordnet sind. Unter "zumindest im Wesentlichen parallel" soll insbesondere eine Ausrichtung einer Richtung relativ zu einer Bezugsrichtung, insbesondere in einer Ebene, verstanden werden, wobei die Richtung gegenüber der Bezugsrichtung eine Abweichung von höchstens 10°, insbesondere von maximal 7,5°, vorzugsweise von höchstens 5° und besonders vorteilhaft von maximal 2,5° aufweist. Hierdurch kann eine Effizienz des zumindest einen ersten Wärmeübertragers und/oder des zumindest einen zweiten Wärmeübertragers vorteilhaft gesteigert werden.

Der zumindest eine erste Wärmeübertrager und der zumindest eine zweite Wärmeübertrager bilden zumindest einen Teil einer baulichen Einheit. Darunter, dass der zumindest eine erste Wärmeübertrager und der zumindest eine zweite Wärmeübertrager "zumindest einen Teil einer baulichen Einheit bilden", soll in diesem Zusammenhang insbesondere verstanden werden, dass der zumindest eine erste Wärmeübertrager und der zumindest eine zweite Wärmeübertrager zumindest in einem montierten Zustand der Brennstoffzellenvorrichtung, beispielsweise formschlüssig und/oder kraftschlüssig und/oder stoffschlüssig, unmittelbar und/oder mittelbar, beispielsweise über zumindest eine weitere Komponente der Brennstoffzellenvorrichtung, fest miteinander verbunden sind. Hierdurch kann eine vorteilhaft kompakte Bauweise der Brennstoffzellenvorrichtung erreicht werden. Ferner kann durch eine Ausbildung einer baulichen Einheit zumindest eines ersten Wärmeübertragers mit dem zumindest einen zweiten Wärmeübertrager eine vorteilhafte Dichtheit, insbesondere Gasdichtheit, erreicht werden.

Die Brennstoffzellenvorrichtung weist zumindest ein Trennelement auf, welches dazu vorgesehen ist, den zumindest einen ersten Wärmeübertrager fluidtechnisch, vorzugsweise vollständig, von dem zumindest einen zweiten Wärmeübertrager zu trennen. Dadurch kann vorteilhaft eine Vermischung von zumindest einem und vorzugsweise aller fluiden Stoffströmen innerhalb zumindest eines Fluidkanals des zumindest einen ersten Wärmeübertragers mit zumindest einem und vorzugsweise allen fluiden Stoffströmen innerhalb zumindest eines Fluidkanals des zumindest einen zweiten Wärmeübertragers zumindest weitgehend vermieden werden. Unter einem "Trennelement" soll in diesem Zusammenhang ein, insbesondere scheibenartiges, Element verstanden werden, welches zumindest im Wesentlichen senkrecht zu einer Spiralachse des zumindest einen ersten Wärmeübertragers und des zumindest einen zweiten Wärmeübertragers zwischen dem zumindest einen ersten Wärmeübertrager und dem zumindest einen zweiten Wärmeübertrager angeordnet ist. Insbesondere ist der zumindest eine erste Wärmeübertrager und der zumindest eine zweite Wärmeübertrager jeweils zumindest einseitig zumindest im Wesentlichen gasdicht von dem zumindest einen Trennelement verschlossen. Zwischen das zumindest eine Trennelement und dem zumindest einen ersten Wärmeübertrager und/oder dem zumindest einen zweiten Wärmeübertrager kann insbesondere ein Hochtemperaturdichtelement eingebracht sein. Dabei kann der zumindest eine erste Wärmeübertrager und/oder der zumindest eine zweite Wärmeübertrager vorzugsweise über eine Vielzahl von Schraubverbindungen mit dem zumindest einen Trennelement verbunden sein. Alternativ kann das zumindest eine Trennelement einstückig mit dem zumindest einen ersten Wärmeübertrager und/oder dem zumindest einen zweiten Wärmeübertrager ausgebildet sein und insbesondere mittels
zumindest einen ersten Wärmeübertrager und dem zumindest einen zweiten Wärmeübertrager verbunden sein.

Des Weiteren wird vorgeschlagen, dass das zumindest eine Trennelement zumindest eine Fluidverbindung aufweist, welche dazu vorgesehen ist, der Nachbrenneinheit zumindest einen Teil eines Anodenabgases und/oder zumindest einen Teil des Erdgases und/oder zumindest einen Teil eines Kathodenabgases zuzuführen. Unter einer "Fluidverbindung" soll in diesem Zusammenhang insbesondere eine Einheit verstanden werden, welche zu einem Transport von insbesondere flüssigen und/oder gasförmigen Stoffen und/oder Stoffgemischen vorgesehen ist. Insbesondere umfasst die zumindest eine Fluidverbindung zumindest eine Hohlleitung, beispielsweise zumindest eine Rohr- und/oder Schlauchleitung. Vorzugsweise umfasst die zumindest eine Fluidverbindung zumindest eine Hohlleitung zu einer Anodenabgasrezirkulation und/oder zum Transport eines Anodenabgases zur Nachbrenneinheit und/oder zumindest eine Hohlleitung zum Transport eines Kathodenabgases zur Nachbrenneinheit und/oder zumindest eine Hohlleitung zum Transport von Erdgas zur Nachbrenneinheit. Die zumindest eine Fluidverbindung ist insbesondere an dem zumindest einen Trennelement angeordnet und/oder zumindest teilweise und vorzugsweise vollständig in das zumindest eine Trennelement eingebettet. Hierdurch können der Nachbrenneinheit vorteilhaft einfach für einen Betrieb der Nachbrenneinheit notwendige, insbesondere gasförmige, Fluide zugeführt werden.

Die erfindungsgemäße Brennstoffzellenvorrichtung soll hierbei nicht auf die oben beschriebene Anwendung und Ausführungsform beschränkt sein. Insbesondere kann die erfindungsgemäße Brennstoffzellenvorrichtung zu einer Erfüllung einer hierin beschriebenen Funktionsweise eine von einer hierin genannten Anzahl von einzelnen Elementen, Bauteilen und Einheiten abweichende Anzahl aufweisen.

### Zeichnung

Weitere Vorteile ergeben sich aus der folgenden Zeichnungsbeschreibung. In den Zeichnungen sind zwei Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine vereinfachte Prinzipskizze einer Brennstoffzellenvorrichtung mit einem Anodengasprozessor und einem Kathodengasprozessor,
- Fig. 2: eine isometrische Darstellung der Brennstoffvorrichtung aus Figur 1 mit spiralförmigen Wärmeübertragern,
- Fig. 3: eine Draufsicht auf einen spiralförmigen Wärmeübertrager des Anodengasprozessors der Brennstoffzellenvorrichtung aus Figur 1,
- Fig. 4: eine weitere isometrische Darstellung der Brennstoffzellenvorrichtung aus Figur 1 aus einem alternativen Blickwinkel,
- Fig. 5: eine weitere isometrische Darstellung der Brennstoffzellenvorrichtung aus Figur 1 aus einem alternativen Blickwinkel,
- Fig. 6: ein Trennelement der Brennstoffzellenvorrichtung aus Figur 1,
- Fig. 7: das Trennelement aus Figur 6 aus einem anderen Blickwinkel und
- Fig. 8: eine Teilschnittdarstellung der Brennstoffzellenvorrichtung aus Figur 1.

### Beschreibung der Ausführungsbeispiele

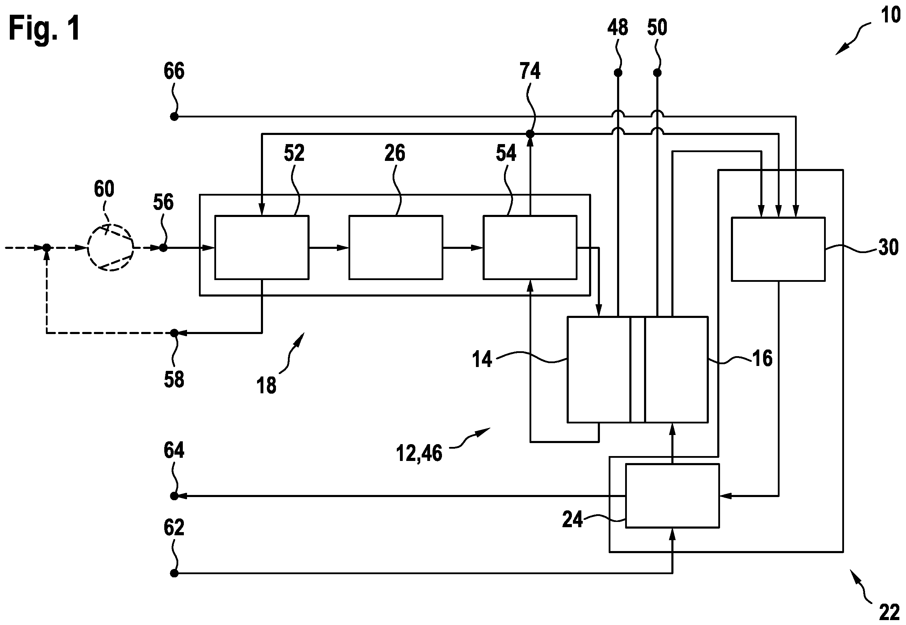

Figur 1 zeigt in einer vereinfachten Prinzipskizze ein Flussdiagramm einer Brennstoffzellenvorrichtung 10 mit einer Brennstoffzelleneinheit 12. Die Brennstoffzelleneinheit 12 ist hier vereinfacht als eine Brennstoffzelle 46 zur Erzeugung elektrischer und/oder thermischer Energie dargestellt. Die elektrische Energie ist über zwei Gleichstromleitungen 48, 50 abgreifbar. Alternativ ist jedoch auch eine Ausbildung einer Brennstoffzelleneinheit als ein Brennstoffzellenstack mit einer Vielzahl von Brennstoffzellen denkbar. Die Brennstoffzelle 46 ist vorzugsweise als Festoxid-Brennstoffzelle ausgeführt. Die Brennstoffzelle 46 weist eine Anode 14 und eine Kathode 16 auf.

Ferner weist die Brennstoffzellenvorrichtung 10 einen Anodengasprozessor 18 und einen Kathodengasprozessor 22 auf. Der Anodengasprozessor 18 umfasst zwei Wärmeübertrager 52, 54 sowie eine zwischen die Wärmeübertrager 52, 54 geschaltete Reformereinheit 26. Der Kathodenprozessor umfasst eine Nachbrenneinheit 30 und einen Wärmeübertrager 24. Die Nachbrenneinheit 30 weist vorzugsweise einen katalytischen Brenner auf. Der Anodengasprozessor 18 und der Kathodengasprozessor 22 können jeweils sowohl als bauliche Einheit als auch als lediglich funktionelle Einheit ausgeführt sein.

Über einen Prozessanschluss 56 wird der Brennstoffzellenvorrichtung 10 ein Frischgas zugeführt. Das Frischgas besteht aus frischem Erdgas und einem Rezirkulat, welches über einen weiteren Prozessanschluss 58 aus der Brennstoffzellenvorrichtung 10 abgeführt wird. Das Erdgas und das Rezirkulat werden außerhalb der Brennstoffzellenvorrichtung 10 zusammengeführt und mittels eines Verdichters 60 verdichtet.

Das Frischgas wird in einem ersten Wärmeübertrager 52 des Anodengasprozessors 18 durch ein Anodenabgas der Brennstoffzelleneinheit 12 vorgewärmt. Im Anschluss wird es durch die Reformereinheit 26 in einen zweiten Wärmeübertrager 54 des Anodengasprozessors 18 geleitet, in dem es auf Reaktionstemperatur zwischen 650 °C und 850 °C erhitzt wird. Die Reformereinheit 26 dient einer endothermen DampfReformierung der im Erdgas vorhandenen langkettigen Alkane (CₓH₂₍ₓ₊₁₎, mit x > 1):

CₓH₂₍ₓ₊₁₎ + xH₂O → xCO + (2x + 1)H₂

Das durch die Reformereinheit 26 gewonnene brenngashaltige Reformat wird der Anode 14 der Brennstoffzelleneinheit 12 zugeführt, wo es durch eine elektrochemische Reaktion unter Strom- und Wärmeproduktion umgesetzt wird. Ein heißes Anodenabgas der Brennstoffzelleneinheit 12 wird in den zweiten Wärmeübertrager 54 des Anodengasprozessors 18 geleitet, um das Frischgas auf Reaktionstemperatur zu erhitzen. Da das Frischgas nicht vollständig in der Anode 14 der Brennstoffzelleneinheit 12 umsetzbar ist, wird ein Teil des Anodenabgases, wie bereits beschrieben, dem frischen Erdgas als Rezirkulat zugeführt. Der Rest des Anodenabgases wird direkt der Nachbrenneinheit 30 zugeführt. Innerhalb der Nachbrenneinheit 30 werden brennbare Bestandteile des Anodenabgases nachverbrannt. Die in der Nachbrenneinheit 30 entstehende Wärme wird verwendet, um eine der Brennstoffzellenvorrichtung 10 über einen Prozessanschluss 62 zugeführte Umgebungsluft für die Kathode 16 zu erhitzen, und um beispielsweise Heizungswasser nach einem weiteren Prozessanschluss 64 zu erwärmen (hier nicht dargestellt).

Für die elektrochemische Reaktion in der Kathode 16 wird die Umgebungsluft in dem Wärmeübertrager 24 des Kathodengasprozessors 22 auf die Reaktionstemperatur erhitzt. Nach dem Austritt aus der Brennstoffzelleneinheit 12 wird ein Kathodenabgas direkt in die Nachbrenneinheit 30 geleitet. Zusätzlich zu einem Teil des Anodenabgases kann der Nachbrenneinheit 30 Erdgas über eine Rohrleitung 66 zugeführt werden. Dies kann vor allem bei einem Aufheizvorgang der Brennstoffzellenvorrichtung 10 notwendig sein.

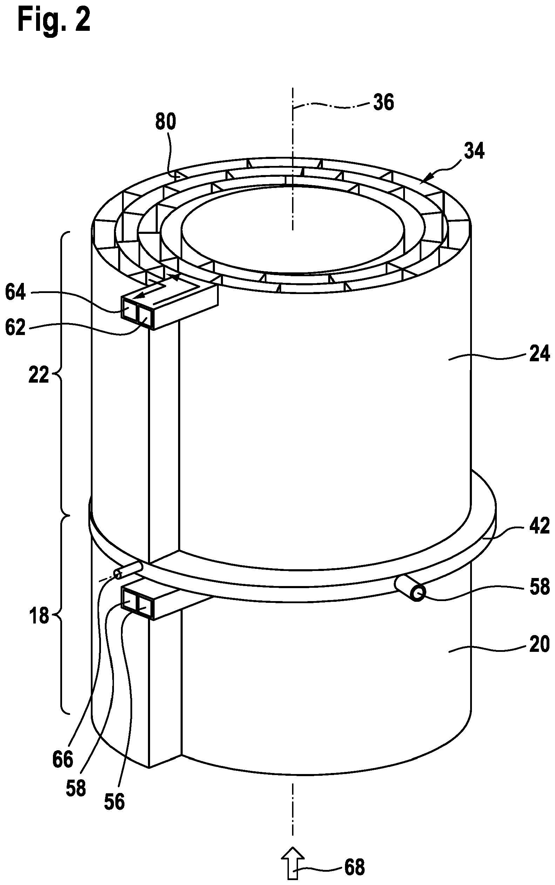

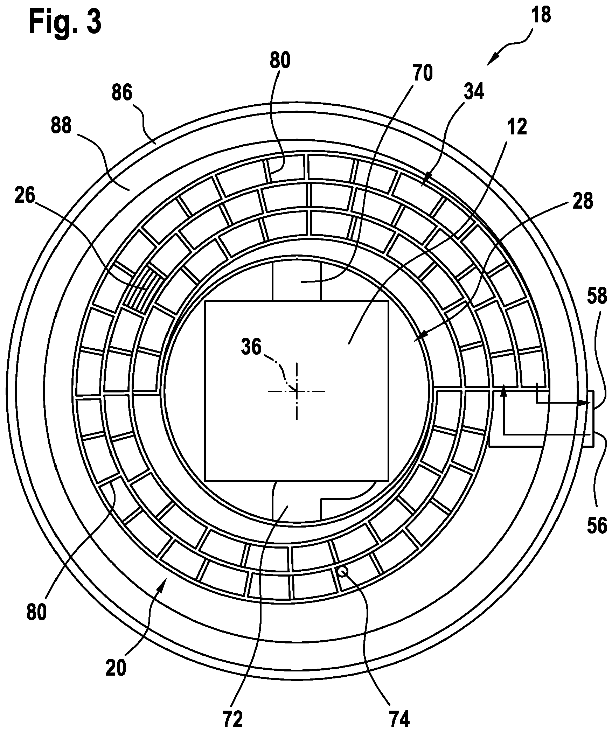

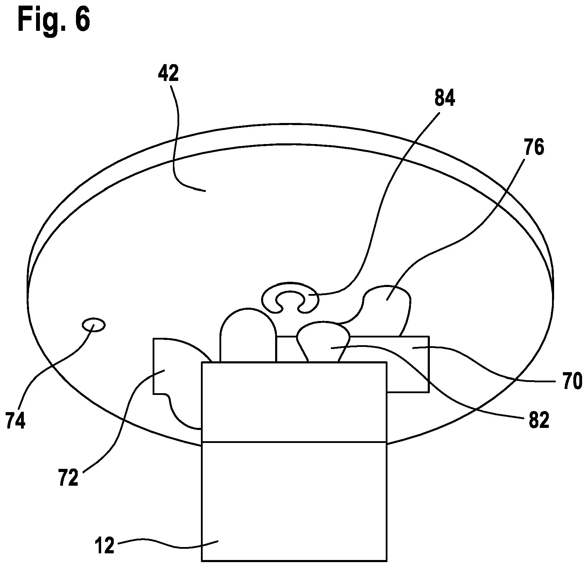

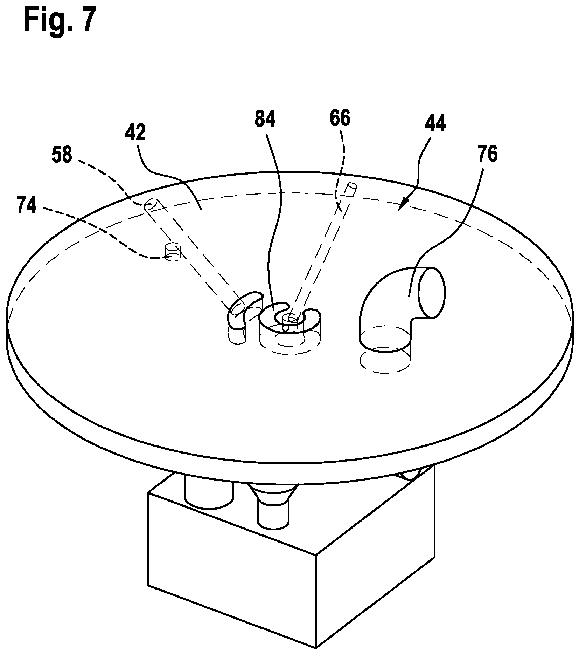

Figur 2 zeigt die Brennstoffzellenvorrichtung 10 in einer isometrischen Ansicht. Der Kathodengasprozessor 22 ist oberhalb des Anodengasprozessors 18 angeordnet. Der Wärmeübertrager 24 des Kathodengasprozessors 22 ist spiralförmig ausgebildet. Die Wärmeübertrager 52, 54 des Anodengasprozessors 18 sind zu einem spiralförmig verlaufenden spiralförmigen Wärmeübertrager 20 zusammengefasst (siehe Figur 3). Zwischen den Wärmeübertragern 20, 24 ist ein scheibenförmiges Trennelement 42 angeordnet. Das Trennelement 42 ist dazu vorgesehen zu verhindern, dass Gase des Anodengasprozessors 18 mit Gasen des Kathodengasprozessors 22 in Kontakt treten. Des Weiteren weist das Trennelement 42 Fluidverbindungen 44 auf, um den Kathodengasprozessor 22 und/oder den Anodengasprozessor 18 und/oder die Brennstoffzelleneinheit 12 verfahrenstechnisch miteinander zu verbinden (siehe Figuren 6 und 7). Zwischen den Wärmeübertragern 20, 24 und dem Trennelement 42 kann beispielsweise jeweils eine Hochtemperaturdichtung (nicht dargestellt) eingebracht sein und die Wärmeübertrager 20, 24 jeweils über eine Vielzahl von Schraubverbindungen (nicht dargestellt) an dem Trennelement 42 befestigt sein, um eine ausreichende Dichtwirkung zu erzielen.

Figur 3 zeigt den Anodengasprozessor 18 in einer Draufsicht aus einer in der Figur 2 gezeigten Blickrichtung 68. Der Wärmeübertrager 20 des Andodengasprozessors ist als Doppelspirale ausgebildet. Der Wärmeübertrager 20 ist um einen Aufnahmeraum 28 herumgeführt, innerhalb dessen die Brennstoffzelleneinheit 12 angeordnet ist. Die Reformereinheit 26 ist innerhalb des Wärmeübertragers 20, etwa auf der Hälfte des Strömungsweges, angeordnet. Alternativ und/oder zusätzlich zu der Reformereinheit 26 kann beispielsweise eine Entschwefelungseinheit und/oder eine andere, dem Fachmann sinnvoll erscheinende chemische Reaktoreinheit innerhalb des Wärmeübertragers 20 angeordnet sein. Im Inneren des Wärmeübertragers 20 wird das Reformat über die Rohrleitung 70 der Anode 14 der Brennstoffzelleneinheit 12 zugeführt. Nach Austritt aus der Anode 14 strömt das Anodenabgas durch eine weitere Rohrleitung 72 in den spiralförmigen Wärmeübertrager 20 zurück. Dort befindet sich etwa auf der Hälfte des Weges eine Abzweigung 74 für eine Rezirkulation des Anodenabgases. Der Wärmeübertrager 20 arbeitet nach dem Gegenstromprinzip.

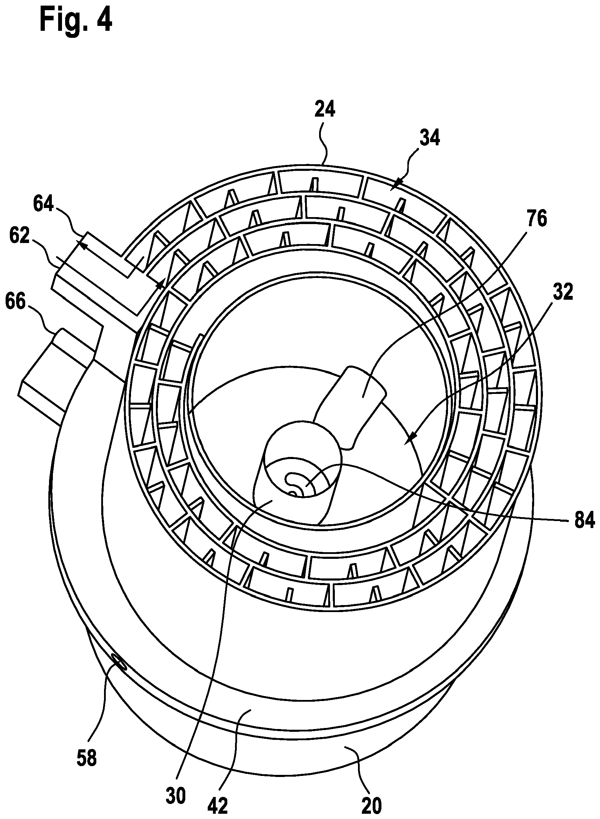

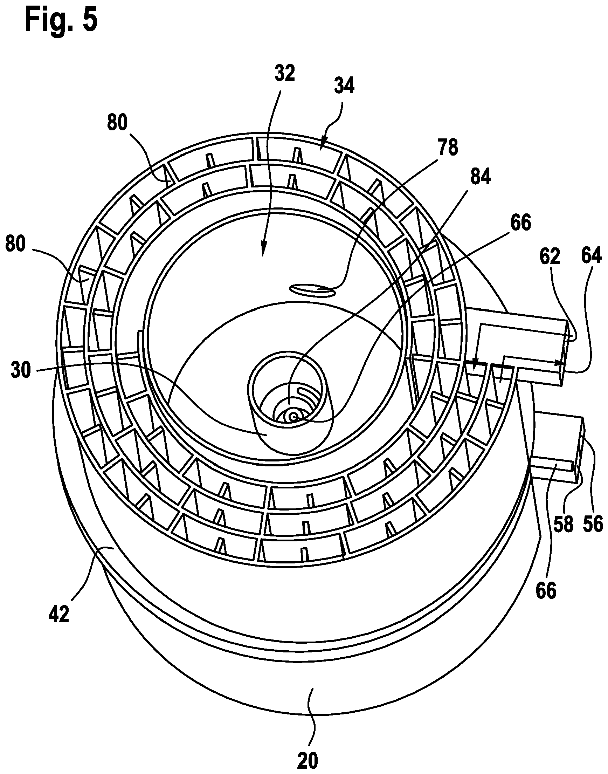

Figur 4 zeigt den Wärmeübertrager 24 des Kathodengasprozessors 22 in einer isometrischen Darstellung. Der Wärmeübertrager 24 des Kathodengasprozessors 22 ist vom Wärmeübertrager 20 des Anodengasprozessors 18 durch das Trennelement 42 abgetrennt. Der Wärmeübertrager 24 des Kathodengasprozessors 22 erwärmt Frischluft aus einer Umgebung der Brennstoffzellenvorrichtung 10 auf Reaktionstemperatur und führt sie der Kathode 16 der Brennstoffzelleneinheit 12 zu. Die Frischluft wird nach demselben Wärmeübertragungsprinzip, das auch im Wärmeübertrager 20 des Anodengasprozessors 18 verwendet wird, durch den Wärmeübertrager 24 des Kathodengasprozessors 22 erwärmt. Der Wärmeübertrager 24 des Kathodengasprozessors 22 ist als Doppelspirale ausgebildet und um einen Aufnahmeraum 32 herumgeführt, innerhalb dessen die Nachbrenneinheit 30 angeordnet ist. Über eine Rohrleitung 76 wird die erwärmte Luft durch das Trennelement 42 hindurch der Kathode 16 der Brennstoffzelleneinheit 12 zugeführt (siehe auch Figuren 6 und 7). Die heißen Abgase der Nachbrenneinheit 30 werden über eine Öffnung 78 in der Wandung des Aufnahmeraums 32 aus dem Aufnahmeraum 32 in den Wärmeübertrager 24 des Kathodengasprozessors 22 geleitet (siehe Figur 5).

Die Wärmeübertrager 20, 24 weisen jeweils eine Fluidleiteinheit 34 auf, welche dazu vorgesehen ist, Gase innerhalb der Wärmeübertrager 20, 24 parallel zu einer Spiralachse 36 vorzugsweise mäanderförmig zu leiten. Hierzu weisen die Fluidleiteinheiten 34 jeweils eine Vielzahl von Fluidleitelementen 80 auf, welche innerhalb der Wärmeübertrager 20, 24 angeordnet sind.

Figur 6 zeigt das Trennelement 42 aus Richtung der Brennstoffzelleneinheit 12. Ein Ausgang der Kathode 16 ist als kurzes Rohrstück in Form eines Diffusors 82 ausgeführt. Die Abgase der Kathode 16 werden über den Diffusor 82 in den Aufnahmeraum 28 geleitet, in welchem die Brennstoffzelleneinheit 12 angeordnet ist, von wo sie durch eine Öffnung 84 in dem Trennelement 42 der Nachbrenneinheit 30 zugeführt werden. Das Blasen vom Kathodenabgas in den Aufnahmeraum 28 verhindert eine Ansammlung brennbarer Gase in der Brennstoffzellenvorrichtung 10. Figur 7 zeigt das Trennelement 42 aus Richtung der Nachbrenneinheit 30. Das Trennelement 42 weist eine Bohrung auf, welche die Abzweigung 74 der Rezirkulation ausbildet. Gemäß Figur 1 wird das Anodenabgas in zwei Volumenströme aufgeteilt. Einer der Volumenströme wird direkt der Nachbrenneinheit 30 zugeleitet, wohingegen der andere Volumenstrom dem Erdgas nach Verlassen der Brennstoffzellenvorrichtung 10 am Prozessanschluss 58 als Rezirkulat zugeführt wird. Entsprechende Fluidleitungen in dem Trennelement 42 leiten das Anodenabgas von der Abzweigung 74 in die Mitte des Trennelements 42, wo es der Nachbrenneinheit 30 zugeführt wird. Im Zentrum des Trennelements 42 befindet sich ein Ausgang der Rohrleitung 66, welche dazu vorgesehen ist, der Nachbrenneinheit 30 frisches Erdgas zuzuführen. Um diese Zuleitung herum befindet sich in hufeisenförmiger Ausführung die Öffnung 84, welche dazu vorgesehen ist, der Nachbrenneinheit 30 das Kathodenabgas zuzuführen.

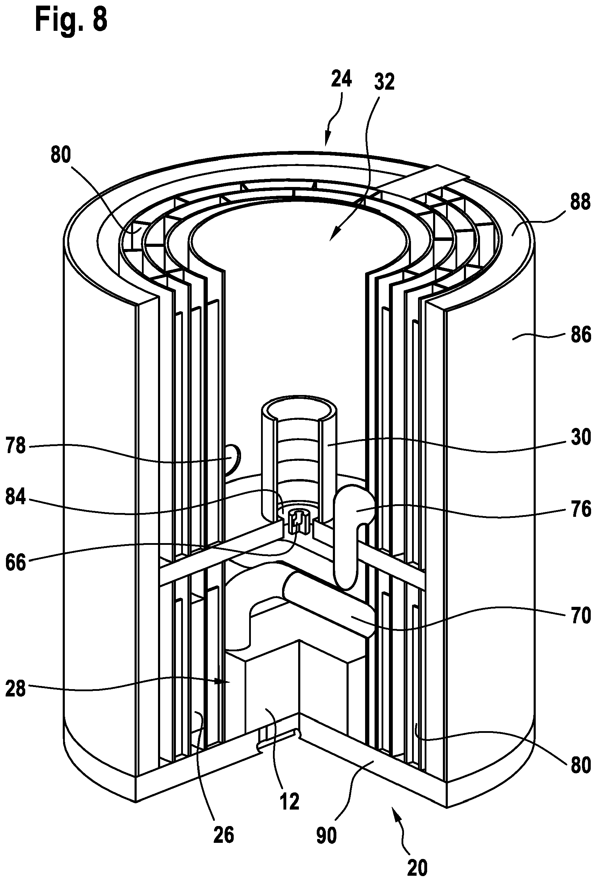

Figur 8 zeigt eine Schnittdarstellung der Brennstoffzellenvorrichtung 10, aus welcher nochmals die Anordnung der einzelnen Komponenten innerhalb der Brennstoffzellenvorrichtung 10 hervorgehen. Zur Verringerung von Wärmeverlusten ist zwischen den Wärmeübertragern 20, 24 und einem Gehäuse 86 eine Isolierung 88 angeordnet. Die gesamte Konstruktion ist zwischen einer Bodenplatte 90 und einer Deckplatte (nicht dargestellt) befestigt.

## Patentansprüche

1. Brennstoffzellenvorrichtung, mit einer Brennstoffzelleneinheit (12), welche zumindest eine Anode (14) und zumindest eine Kathode (16) aufweist, mit zumindest einem Anodengasprozessor (18), welcher zumindest einen ersten Wärmeübertrager (20) aufweist, und mit zumindest einem Kathodengasprozessor (22), welcher zumindest einen zweiten Wärmeübertrager (24) aufweist, wobei der zumindest eine erste Wärmeübertrager (20) und der zumindest eine zweite Wärmeübertrager (24) jeweils spiralförmig ausgebildet sind, wobei der zumindest eine erste Wärmeübertrager (20) und der zumindest eine zweite Wärmeübertrager (24) zumindest einen Teil einer baulichen Einheit bilden, **gekennzeichnet durch** zumindest ein Trennelement (42), welches dazu vorgesehen ist, den zumindest einen ersten Wärmeübertrager (20) fluidtechnisch von dem zumindest einen zweiten Wärmeübertrager (24) zu trennen.

2. Brennstoffzellenvorrichtung nach Anspruch 1, **dadurch gekennzeichnet, dass** der zumindest eine erste Wärmeübertrager (20) und/oder der zumindest eine zweite Wärmeübertrager (24) als eine Doppelspirale ausgebildet ist.

3. Brennstoffzellenvorrichtung nach Anspruch 1 oder 2, **dadurch gekennzeichnet, dass** der zumindest eine Anodengasprozessor (18) eine Reformereinheit (26) aufweist, welche innerhalb des zumindest einen ersten Wärmeübertragers (20) angeordnet ist.

4. Brennstoffzellenvorrichtung nach einem der vorhergehenden Ansprüche, **dadurch gekennzeichnet, dass** der zumindest eine erste Wärmeübertrager (20) um einen ersten Aufnahmeraum (28) herumgeführt ist, innerhalb dessen die Brennstoffzelleneinheit (12) angeordnet ist.

5. Brennstoffzellenvorrichtung nach einem der vorhergehenden Ansprüche, **dadurch gekennzeichnet, dass** der zumindest eine Kathodengasprozessor (22) eine Nachbrenneinheit (30) aufweist, welche dazu vorgesehen ist, zumindest einen brennbaren Bestandteil eines Abgases zumindest weitgehend nachzuverbrennen.

6. Brennstoffzellenvorrichtung nach Anspruch 5, **dadurch gekennzeichnet, dass** der zumindest eine zweite Wärmeübertrager (24) um einen zweiten Aufnahmeraum (32) herumgeführt ist, innerhalb dessen die Nachbrenneinheit (30) angeordnet ist.

7. Brennstoffzellenvorrichtung nach einem der vorhergehenden Ansprüche, **dadurch gekennzeichnet, dass** der zumindest eine erste Wärmeübertrager (20) und/oder der zumindest eine zweite Wärmeübertrager (24) eine Fluidleiteinheit (34) aufweist, welche dazu vorgesehen ist, zumindest ein Fluid zumindest im Wesentlichen parallel zu einer Spiralachse (36) mäanderförmig zu leiten.

8. Brennstoffzellenvorrichtung nach Anspruch 1, **dadurch gekennzeichnet, dass** das zumindest eine Trennelement (42) zumindest eine Fluidverbindung (44) aufweist, welche dazu vorgesehen ist, der Nachbrenneinheit (30) zumindest einen Teil eines Anodenabgases und/oder zumindest einen Teil des Erdgases und/oder zumindest einen Teil eines Kathodenabgases zuzuführen.

## Claims

1. Fuel cell device having a fuel cell unit (12) which has at least one anode (14) and at least one cathode (16), having at least one anode gas processor (18) which has at least one first heat exchanger (20), and having at least one cathode gas processor (22) which has at least one second heat exchanger (24), wherein the at least one first heat exchanger (20) and the at least one second heat exchanger (24) are each of spiral-shaped form, wherein the at least one first heat exchanger (20) and the at least one second heat exchanger (24) form at least a part of a structural unit, **characterized by** at least one separating element (42) which is provided for fluidically separating the at least one first heat exchanger (20) from the at least one second heat exchanger (24).

2. Fuel cell device according to Claim 1, **characterized in that** the at least one first heat exchanger (20) and/or the at least one second heat exchanger (24) are/is in the form of a double spiral.

3. Fuel cell device according to Claim 1 or 2, **characterized in that** the at least one anode gas processor (18) has a reformer unit (26) which is arranged within the at least one first heat exchanger (20).

4. Fuel cell device according to one of the preceding claims, **characterized in that** the at least one first heat exchanger (20) is led around a first receiving space (28), within which the fuel cell unit (12) is arranged.

5. Fuel cell device according to one of the preceding claims, **characterized in that** the at least one cathode gas processor (22) has an afterburning unit (30) which is provided for at least largely afterburning at least one combustible constituent of an exhaust gas.

6. Fuel cell device according to Claim 5, **characterized in that** the at least one second heat exchanger (24) is led around a second receiving space (32), within which the afterburning unit (30) is arranged.

7. Fuel cell device according to one of the preceding claims, **characterized in that** the at least one first heat exchanger (20) and/or the at least one second heat exchanger (24) have/has a fluid conducting unit (34) which is provided for conducting in a meandering manner at least one fluid at least substantially parallel to a spiral axis (36).

8. Fuel cell device according to Claim 1, **characterized in that** the at least one separating element (42) has at least one fluid connection (44) which is provided for supplying to the afterburning unit (30) at least a part of an anode exhaust gas and/or at least a part of the natural gas and/or at least a part of a cathode exhaust gas.

## Revendications

1. Dispositif de pile à combustible, comprenant une unité de pile à combustible (12) qui possède au moins une anode (14) et au moins une cathode (16), comprenant au moins un processeur de gaz d'anode (18), lequel possède au moins un premier échangeur de chaleur (20), et comprenant au moins un processeur de gaz de cathode (22), lequel possède au moins un deuxième échangeur de chaleur (24), l'au moins un premier échangeur de chaleur (20) et l'au moins un deuxième échangeur de chaleur (24) étant respectivement réalisés en forme de spirale, l'au moins un premier échangeur de chaleur (20) et l'au moins un deuxième échangeur de chaleur (24) formant au moins une partie d'une unité structurelle, **caractérisé par** au moins un élément de séparation (42) qui est configuré pour déconnecter fluidiquement l'au moins un premier échangeur de chaleur (20) de l'au moins un deuxième échangeur de chaleur (24).

2. Dispositif de pile à combustible selon la revendication 1, **caractérisé en ce que** l'au moins un premier échangeur de chaleur (20) et/ou l'au moins un deuxième échangeur de chaleur (24) sont réalisés sous la forme d'une double spirale.

3. Dispositif de pile à combustible selon la revendication 1 ou 2, **caractérisé en ce que** l'au moins un processeur de gaz d'anode (18) possède une unité de reformage (26), laquelle est disposée à l'intérieur de l'au moins un premier échangeur de chaleur (20).

4. Dispositif de pile à combustible selon l'une des revendications précédentes, **caractérisé en ce que** l'au moins un premier échangeur de chaleur (20) est passé autour d'un premier espace d'accueil (28) à l'intérieur duquel est disposée l'unité de pile à combustible (12).

5. Dispositif de pile à combustible selon l'une des revendications précédentes, **caractérisé en ce que** l'au moins un processeur de gaz de cathode (22) possède une unité de post-combustion (30) qui est conçue pour effectuer la post-combustion au moins poussée d'au moins une composante combustible d'un effluent gazeux.

6. Dispositif de pile à combustible selon la revendication 5, **caractérisé en ce que** l'au moins un deuxième échangeur de chaleur (24) est passé autour d'un deuxième espace d'accueil (32) à l'intérieur duquel est disposée l'unité de post-combustion (30).

7. Dispositif de pile à combustible selon l'une des revendications précédentes, **caractérisé en ce que** l'au moins un premier échangeur de chaleur (20) et/ou l'au moins un deuxième échangeur de chaleur (24) possèdent une unité de conduction de fluide (34) qui est conçue pour conduire au moins un fluide en forme de méandre au moins sensiblement en parallèle avec un axe de spirale (36).

8. Dispositif de pile à combustible selon la revendication 1, **caractérisé en ce que** l'au moins un élément de séparation (42) possède au moins une liaison de fluide (44) qui est conçue pour acheminer à l'unité de post-combustion (30) au moins une partie d'un effluent gazeux d'anode et/ou au moins une partie du gaz naturel et/ou au moins une partie d'un effluent gazeux de cathode.
